(19) Europäisches Patentamt
European Patent Office
Office européen des brevets

(11) **EP 4 383 794 A1**

(12) **EUROPEAN PATENT APPLICATION**

(43) Date of publication:
**12.06.2024 Bulletin 2024/24**

(21) Application number: **23211373.8**

(22) Date of filing: **22.11.2023**

(51) International Patent Classification (IPC):
***H04W 24/02*** (2009.01)  ***H04L 41/5009*** (2022.01)

(52) Cooperative Patent Classification (CPC):
**H04W 24/02; H04L 41/0897; H04L 41/16;**
**H04L 41/5009; H04L 43/065; H04L 43/16**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.12.2022 FI 20226086**

(71) Applicant: **Nokia Solutions and Networks Oy**
**02610 Espoo (FI)**

(72) Inventors:
• **KAK, Ahan**
**Summit - NJ, 07901 (US)**
• **CHOI, NAKJUNG**
**Florham Park - NJ, 07932 (US)**

(74) Representative: **Nokia EPO representatives**
**Nokia Technologies Oy**
**Karakaari 7**
**02610 Espoo (FI)**

(54) **NETWORK SLICING IN RADIO ACCESS NETWORK**

(57)    There is provided a method for radio access network slicing. A first set of radio access network, RAN, statistics and a second set of RAN statistics are received. The first set of RAN statistics comprises non real time statistics from the RAN. The second set of RAN statistics comprises near real time statistics from the RAN. The first set of RAN statistics and a service level agreement are provided to a non real time reinforcement learning model as input. Resource management policy per slice is obtained as output from the model. The second set of RAN statistics, the service level agreement and the resource management policy per slice are provided to a near real time reinforcement learning model as input. Resource allocation per slice is obtained as output from the model.

Fig. 5

receiving, from a network node, a first set of radio access network, RAN, statistics — 510

receiving, from the network node, a second set of RAN statistics; wherein the first set of RAN statistics comprises non real time statistics from the radio access network comprising the network node; and the second set of RAN statistics comprises near real time statistics from a radio access network comprising the network node — 520

providing at least the first set of RAN statistics and a service level agreement to a first radio resource management model as input, wherein the first radio resource management model is a non real time reinforcement learning model — 530

obtaining, as output from the first radio resource management model, resource management policy per slice — 540

providing at least the second set of RAN statistics, the service level agreement and the resource management policy per slice to a second radio resource management model as input, wherein the second radio resource management model is a near real time reinforcement learning model — 550

obtaining, as output from the second radio resource management model, resource allocation per slice — 560

providing the resource allocation per slice to the network node — 570

500

EP 4 383 794 A1

**Description**

FIELD

Various example embodiments relate to network slicing in radio access network, e.g. in open radio access network.

BACKGROUND

Network slicing may be used, for example, in various cellular communication networks, such as, in cellular communication networks operating according to 5G radio access technology. 5G radio access technology may also be referred to as New Radio, NR, access technology. 3rd Generation Partnership Project, 3GPP, develops standards for 5G/NR and one of the topics in the 3GPP discussions is related to network slicing. According to the discussions there is a need to provide enhanced methods, apparatuses and computer programs related to network slicing in cellular communication networks. Such enhancements may also be beneficial in other wireless communication networks, such as in 6G networks in the future, as well.

SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a first aspect, there is provided a method for radio access network slicing, comprising: receiving, from a network node, a first set of radio access network, RAN, statistics; receiving, from the network node, a second set of RAN statistics; wherein the first set of RAN statistics comprises non real time statistics from the radio access network comprising the network node; and the second set of RAN statistics comprises near real time statistics from a radio access network comprising the network node; providing at least the first set of RAN statistics and a service level agreement to a first radio resource management model as input, wherein the first radio resource management model is a non real time reinforcement learning model; obtaining, as output from the first radio resource management model, resource management policy per slice; providing at least the second set of RAN statistics, the service level agreement and the resource management policy per slice to a second radio resource management model as input, wherein the second radio resource management model is a near real time reinforcement learning model; obtaining, as output from the second radio resource management model, resource allocation per slice; and providing the resource allocation per slice to the network node.

According to an embodiment, the first set of RAN statistics comprises at least one of: transport block size per user equipment; radio link control queue length per user equipment; throughput per user equipment; latency per user equipment; or resource availability of a network node of the radio access network.

According to an embodiment, the second set of RAN statistics comprises at least one of: transport block size per user equipment; radio link control queue length per user equipment; throughput per user equipment; latency per user equipment; resource utilization per slice; or resource availability of a network node of the radio access network.

According to an embodiment, the resource management policy per slice is indicative of resource allocation of dedicated resources, prioritized resource and/or shared resource per slice.

According to an embodiment, the method comprises: providing feedback from the second radio resource management model as input to the first radio resource management model.

According to an embodiment, the feedback comprises at least one of: the resource allocation per slice, obtained as output from the second radio resource management model; or latency SLA violation per slice.

According to an embodiment, the feedback is provided to the second radio resource management model over O1-performance measurement interface or A1 interface.

According to an embodiment, the first set of radio access network statistics are received over O1-performance measurement interface.

According to an embodiment, the second set of radio access network statistics are received over E2 interface.

According to an embodiment, the resource management policy per slice is provided to the second radio resource management model over O1-configuration management interface or A1 interface.

According to an embodiment, the resource allocation per slice is provided to the radio access network over E2 interface.

According to a second aspect, there is provided an apparatus comprising: at least one processor; and at least one memory storing instructions that, when executed by the at least one processor, cause the apparatus at least to perform: receiving, from a network node, a first set of radio access network, RAN, statistics; receiving, from the network node, a second set of RAN statistics; wherein the first set of RAN statistics comprises non real time statistics from the radio access network comprising the network node; and the second set of RAN statistics comprises near real time statistics from a radio access network comprising the network node; providing at least the first set of RAN statistics and a service level agreement to a first radio resource management model as input, wherein the first radio resource management model is a non real time reinforcement learning model; obtaining, as output from the first radio resource management model, resource management policy per slice; providing at least the second set of RAN statistics, the service level agreement and the resource management policy per slice to a second radio resource management model as input, wherein the second radio resource management model is a near real time reinforcement learning model; obtaining, as output from the second radio resource management model, resource allocation per slice; and providing the resource allocation per slice to the network node.

According to an embodiment, the apparatus of the second aspect is caused to perform any of the embodiments of the method of the first aspect.

According to a further aspect, there is provided an apparatus comprising means for performing at least the method of the first aspect and any of the embodiments thereof.

According to an embodiment, the means comprises at least one processor; and at least one memory storing instructions that, when executed by the at least one processor, cause the performance of the apparatus.

According to a further aspect, there is provided a (non-transitory) computer readable medium comprising instructions that, when executed by an apparatus, cause the apparatus to perform at least the method of the first aspect and any of the embodiments thereof.

According to a further aspect, there is provided a computer program comprising instructions, which, when executed by an apparatus, cause the apparatus to perform the method of the first aspect and any of the embodiments thereof.

According to an aspect, there is provided a method, comprising: providing, by a network node, a first set of radio access network statistics; providing, by the network node, a second set of radio access network statistics; wherein the first set of RAN statistics comprises non real time statistics from the radio access network comprising the network node; and the second set of RAN statistics comprises near real time statistics from a radio access network comprising the network node; receiving, by the network node, resource allocation per slice.

According to a further aspect, there is provided an apparatus comprising: at least one processor; and at least one memory storing instructions that, when executed by the at least one processor, cause the apparatus at least to perform the method of the above aspect and any of the embodiments thereof.

According to a further aspect, there is provided an apparatus comprising means for performing at least the method of the above aspect and any of the embodiments thereof.

According to a further aspect, there is provided a (non-transitory) computer readable medium comprising instructions that, when executed by an apparatus, cause the apparatus to perform at least the method of the above aspect and any of the embodiments thereof.

According to a further aspect, there is provided a computer program comprising instructions, which, when executed by an apparatus, cause the apparatus to perform the method of the above aspect and any of the embodiments thereof.

BRIEF DESCRIPTION OF THE DRAWINGS

Some example embodiments will now be described with reference to the accompanying drawings.

Fig. 1 shows, by way of example, a network architecture of communication system;

Fig. 2 shows, by way of example, by way of example, radio access network slicing overview in open radio access network;

Fig. 3 shows, by way of example, an overview of a hierarchical radio resource management framework;

Fig. 4 shows, by way of example, a hierarchical radio resource management framework integrated within an open radio access network architecture;

Fig. 5 shows, by way of example, a flowchart of a method;

Fig. 6 shows, by way of example, signalling between entities;

Fig. 7 shows, by way of example, metrics and interfaces for their transmission;

Fig. 8 shows, by way of example, metrics and interfaces for their transmission; and

Fig. 9 shows, by way of example, a block diagram of an apparatus.

DETAILED DESCRIPTION

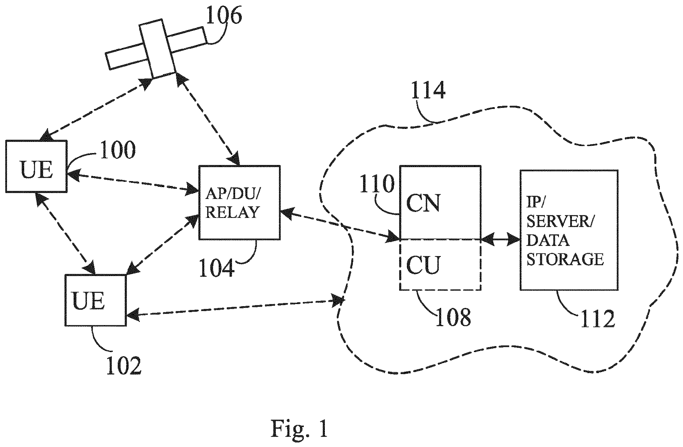

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

The example of Fig. 1 shows a part of an exemplifying radio access network. Fig. 1 shows user devices or user equipments (UEs) 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. An example of the network node configured to operate as a relay station is integrated access and backhaul node (IAB). The distributed unit (DU) part of the IAB node performs BS functionalities of the IAB node, while the backhaul connection is carried out by the mobile termination (MT) part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) technology at both UE and gNB side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control.

5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

An open radio access network (O-RAN) architecture has paved the way for disaggregated radio access networks coupled with a robust softwarized control architecture. While the NG-RAN architecture pioneered the disaggregation of the monolithic gNB into a centralized unit control plane (CU-CP), CU user plane (CU-UP), and DU, O-RAN further disaggregates the DU into two distinct entities: an O-RAN DU and an O-RAN radio unit (RU).

Additionally, through a set of external network controllers, e.g. the near-real time RAN intelligent controller (near-RT RIC) and non-real time RAN intelligent controller (non-RT RIC)), O-RAN has given rise to the possibility of introducing novel network control functionalities and assurance frameworks that are geared specifically towards the access network. For example, the near-RT RIC may operate close to real time and exercise near-real time control of the underlying RAN over the E2 interface through applications called xApps. Near-RT RIC may operate, for example, on a timescale of $\geq$ 10 ms and $\leq$ 1000 ms, or even between 1 ms and 1000 ms. Key functions of the near-RT RIC include interpretation and enforcement of policies from the non-RT RIC, along with the collection of statistics from the RANs.

As part of the service management and orchestration (SMO) framework, the non-RT RIC oversees the control and optimization of RAN elements on a non-real time basis. For example, the non-RT RIC may operate on a timescale of > 1 s. Such control is enabled through applications called rApps that are responsible for providing policy-based guidance and enrichment information for the near-RT RIC.

The SMO (and thus non-RT RIC) leverages the O1 interface to interact with both the RAN and the near-RT RIC. Additionally, the non-RT RIC may also use the A1 interface to interact with the near-RT RIC.

Applying network slicing, network operators may create virtual, independent networks, or network slices, within the same physical network, and may guarantee service levels for the slice as if it were a distinct network. Network slicing provides for multiple logical networks, or slices, to be provisioned on a common physical infrastructure, thereby allowing the network to be delivered as a service. The provisioned slices may have varying service level agreements (SLAs).

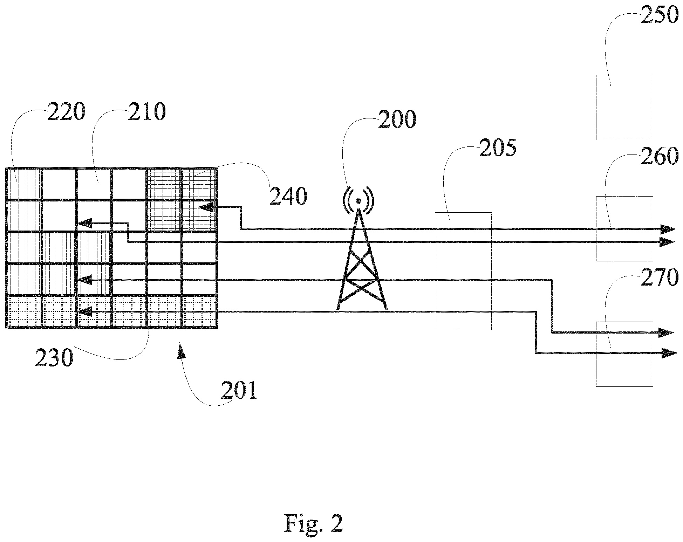

While network slices traverse all domains of the network, that is, access, transport, core, edge and central clouds, within the context of O-RAN, network slicing primarily refers to RAN slicing. Fig. 2 shows, by way of example, radio access network slicing overview in open radio access network (O-RAN). Shown are the O-RAN RU 200 and the O-RAN DU 205, O-CU-CP 250, and O-CU-UP 260, 270.

Radio resource blocks 201 may be divided into slices via radio resource management (RRM). For example, a first slice 210 may be for vehicle to everything (V2X) communication, a second slice 220 may be for internet of things (IoT) communication, a third slice 230 may be for enterprise use, and a fourth slice 240 may be for fixed wireless access (FWA).

Resource management strategies for RAN slicing are a key consideration for communications service providers (CSPs) in order to optimize the utilization of radio resources and improve network monetization. For example, machine learning (ML)-based radio resource management (RRM) techniques may be used to obtain efficient resource allocation in network slicing.

O-RAN supports three kinds of machine learning paradigms: a) training and inference in the SMO; b) training and inference in the near-RT RIC; c) training in SMO / inference in the near-RT RIC.

Network slicing is dynamic of its nature. The traffic within different slices may change rapidly, and the number of slices in the network, the number of users within a slice, and the channel conditions and mobility patterns are time variant. Therefore, it may be beneficial to take the changing slice dynamics into account in RRM framework to achieve efficient resource allocation and SLA satisfaction.

Referring back to the ML paradigms listed above, their performance may be sub-optimal when facing changing network conditions. For example, RRM strategies that rely on the framework a), i.e., training and inference in the SMO, might not be able to adapt to near-real time network dynamics such as sudden changes in the slice's traffic.

As another example, RRM strategies that adopt the framework b), i.e., training and inference in the near-RT RIC, may miss out on the non-real time aspects such as a change in the number of slices, along with experiencing a large computation overhead that affects scalability.

As a further example, RRM strategies that adopt the framework c), i.e., training in SMO / inference in the near-RT RIC, may suffer from a lack of interaction between the near-RT and non-RT timescales, since the training and inference stages operate at different timescales.

There is provided a reinforcement learning (RL), e.g. deep reinforcement learning (DRL), -based hierarchical radio resource management (H-RRM) framework for RAN slicing within a RAN, e.g. O-RAN. The framework operates in a plug-and-play manner, wherein end-users, such as CSPs, enterprises, etc. may use their own ML models to address their specific optimization goals. In other words, the H-RRM framework as disclosed herein is independent of a specific ML or RL model.

The H-RRM architecture for RAN slicing employs an upper layer non-RT RL agent operating at the non-RT timescale and a lower layer RT or near-RT agent operating at the RT or near-RT timescale. Training and inference may be performed in both the non-RT RIC and the RT or near-RT RIC. The H-RRM architecture as disclosed herein operates simultaneously at both timescales, RT or near-RT timescale and non-RT timescale.

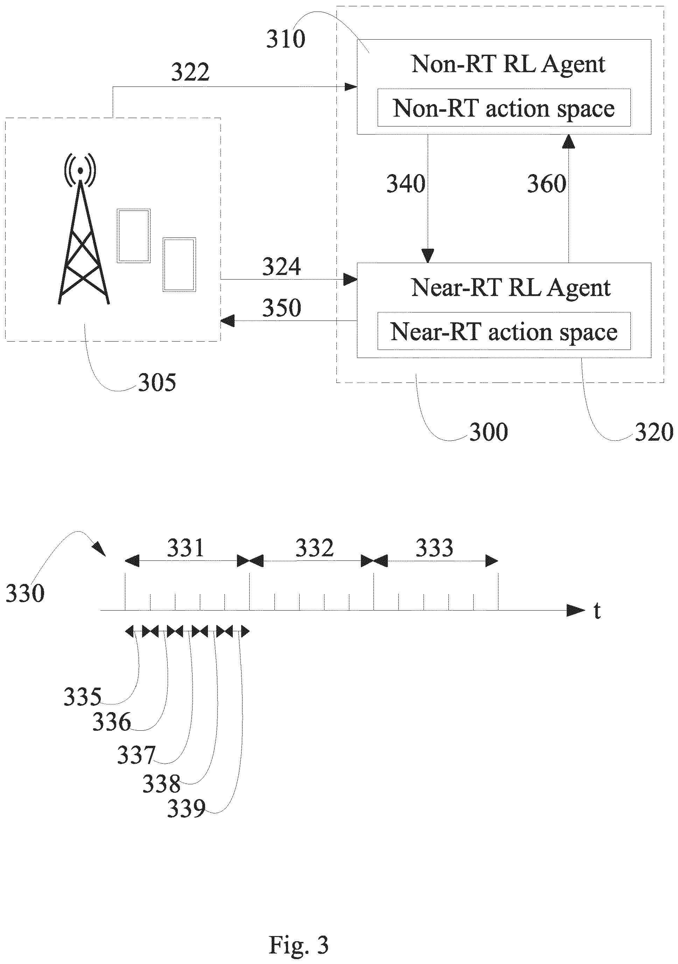

Fig. 3 shows, by way of example, an overview of a H-RRM framework 300. The framework 300 comprises an upper layer non-RT RL agent 310 and a lower layer near-RT RL agent 320. The non-RT RL agent 310 receives non-RT observations 322 from the RAN 305. The near-RT RL agent 320 receives near-RT observations 324 from the RAN 305. Thus, the two agents 310, 320 share the state space by observing the environment at different timescales, as shown by the time (t) line 330. Each non-RT interval 331, 332, 333, comprises several near-RT intervals 335, 336, 337, 338, 339 within it. For example, if we consider a non-RT timescale of 1000 ms and a near-RT timescale of 200 ms, then each non-RT interval will contain five near-RT intervals. From this it follows that the near-RT agent samples the environment five times faster than its non-RT counterpart. In this manner, the near-RT agent 320 is configured to capture sudden changes in the network, and the non-RT agent 310 is configured to track the long-term trend.

The action space of the original problem has been decomposed into two sub-problems: one at the non-RT timescale and another at the near-RT timescale. The non-RT agent's 310 action may provide intrinsic guidance 340 to the functioning of the near-RT agent 320, which may leverage this input as part of the near-RT action. The near-RT decision (output) may then be communicated 350 to the RAN 305 for execution. The output may also be communicated 360 to the Non-RT RL agent as environment feedback. From a temporal perspective, the decomposition of the original problem into non-RT and near-RT timescales allows DRL to focus on both short-term and long-term dynamics.

The observation and action stages within each agent need not follow the same time interval. Referring to the example above, if the non-RT agent samples the environment every 1000 ms, this does not mean it must take an action (intrinsic guidance step) every 1000 ms, too. However, it may use the same time interval for the observation and action stages. These intervals are completely configurable by the system operator. The same flexibility also applies to the near-RT agent. Additionally, from a spatial perspective, the decomposed action space results in a scalable approach for multi-gNB RRM while also allowing for coordination across network nodes, e.g. gNBs. While the non-RT agent may take a coarse-grained view of a larger number of gNBs spread over a larger geographical area, the near-RT agent may take a fine-grained view of a fewer gNBs over a small area.

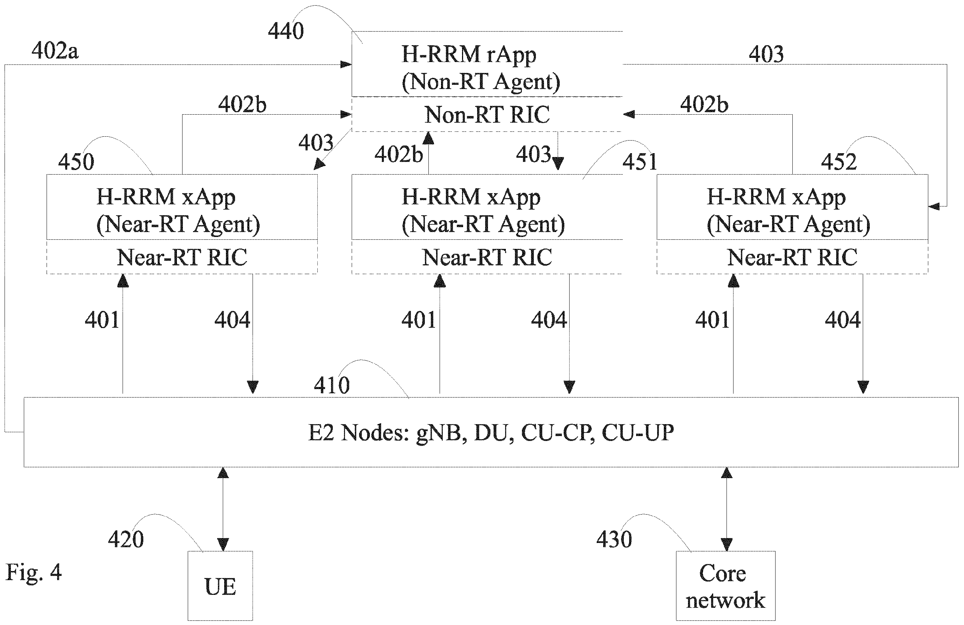

Fig. 4 shows, by way of example, H-RRM framework integrated within the O-RAN architecture. The RAN 410 connects the UEs 420 to the core network 430. The non-RT RL agent 310 from Fig. 3 may be implemented as rApp 440 on the Non-RT RIC. The near-RT RL agent 320 from Fig. 3 may be implemented as xApp or a plurality of xApps 450, 451, 452 on the near-RT RIC. The RL models may apply, for example, the ML paradigm wherein training and inference are performed in both the non-RT RIC and near-RT RIC.

The non-RT agent 440 may use, for example, the O1-PM interface to obtain non-RT RAN statistics 402a from the RAN 410. The near-RT agent 450, 451, 452 may use, for example, the E2 interface to obtain near-RT RAN statistics 401 from the RAN 410. The intrinsic guidance 403 or policy configuration from the non-RT agent 440 to the near-RT agent 450, 451, 452 may be communicated over either the O1-configuration management (O1-CM) or A1 interface, for example. The environment feedback 402b from the near-RT agent 450, 451, 452 to the non-RT agent 440 may use either the O1-performance measurement (O1-PM) or A1 interface, for example. The action or configuration 404 from the near-RT RIC, comprising the near-RT agent, to the RAN 410 may be sent over the E2 interface, for example.

The near-RT RAN statistics 401 may comprise at least one of: transport block size per UE (per-UE transport block size), radio link control queue length per UE (per-UE RLC queue length), throughput per UE (per-UE throughput), latency per UE (per-UE latency), resource utilization per slice (per-slice resource utilization), or resource availability of a network node (gNB resource availability).

The non-RT RAN statistics 402a may comprise at least one of: transport block size per UE (per-UE transport block size), radio link control queue length per UE (per-UE RLC queue length), throughput per UE (per-UE throughput), latency per UE (per-UE latency), or resource availability of a network node (gNB resource availability).

The intrinsic guidance 403 transmitted from non-RT agent 440 to the near-RT agent 450, 451, 452 may provide the per-slice RRM policy configuration. Based on the statistics 402a and feedback 402b received, the non-RT RIC 440 may define the RRM policy. The RRM policy may be, for example, the rRMPolicyRatio. The rRMPolicyRatio may describe the dedicated resources (DR), the prioritized resources (PR), and the shared resources (SR) per slice, e.g. for each slice, for network nodes within its domain. The rRMPolicyRatio may comprise the rRMPolicyDedicatedRatio, rRMPolicyMinRatio, and rRMPolicyMaxRatio.

A corresponding rRMPolicyMemberList may comprise a single slice or multiple slices. The near-RT RIC may manage the allocation of the resources (DR, PR, SR) in a slice and provide the final slice resource allocation. The configuration 404 indicative of the resource allocation per slice may be provided as output to the corresponding network nodes, e.g. gNBs. In addition, the resource allocation per slice may be provided as feedback to the non-RT RIC. For example, the resource allocation may be given as a single allocation value per slice. As another example, the resource allocation may be given as a set of allocation values indicative of DR, PR, and SR per slice.

The feedback 402b transmitted from the near-RT RIC to the non-RT RIC may comprise at least one of: the resource allocation per slice (per-slice resource allocation, obtained as output from the near-RT agent), or latency SLA violation per slice (per-slice latency SLA violation).

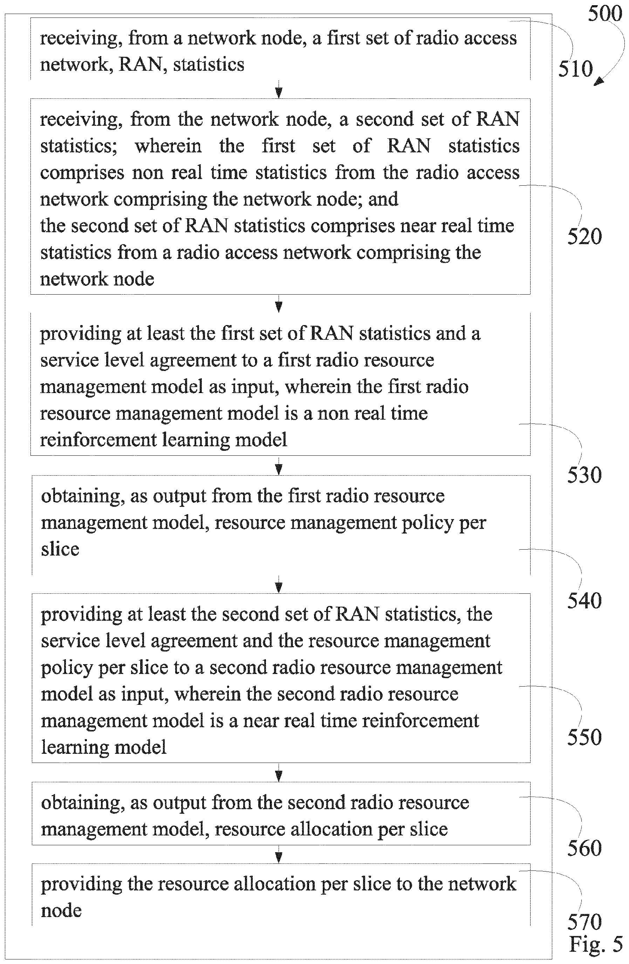

Fig. 5 shows, by way of example, a flowchart of a method 500. The phases of the illustrated method may be performed by an apparatus, or by a control device configured to control the functioning thereof, when installed therein. The apparatus may comprise, for example, a network node, e.g. a second network node, such as gNB. The apparatus may be configured to realize the H-RRM framework 300 of Fig. 3, which is configured to perform at least the method 500. The apparatus may comprise, for example, the non-RT RL agent and the near-RT RL agent. The apparatus may comprise one or more servers configured to realize the H-RRM framework. The method 500 comprises receiving 510, from a network node, a first set of radio access network, RAN, statistics. The method 500 comprises receiving 520, from the network node, a second set of RAN statistics; wherein the first set of RAN statistics comprises non real time statistics from the radio access network comprising the network node; and the second set of RAN statistics comprises near real time statistics from a radio access network comprising the network node. For example, the second network node may receive RAN statistics from a first network node or from a plurality of network nodes (RAN). The method 500 comprises providing 530 at least the first set of RAN statistics and a service level agreement to a first radio resource management model as input, wherein the first radio resource management model is a non real time reinforcement learning model. The method 500 comprises obtaining 540, as output from the first radio resource management model, resource management policy per slice. The method 500 comprises providing 550 at least the second set of RAN statistics, the service level agreement and the resource management policy per slice to a second radio resource management model as input, wherein the second radio resource management model is a near real time reinforcement learning model. The method 500 comprises obtaining 560, as output from the second radio resource management model, resource allocation per slice. The method 500 comprises providing 570 the resource allocation per slice to the network node.

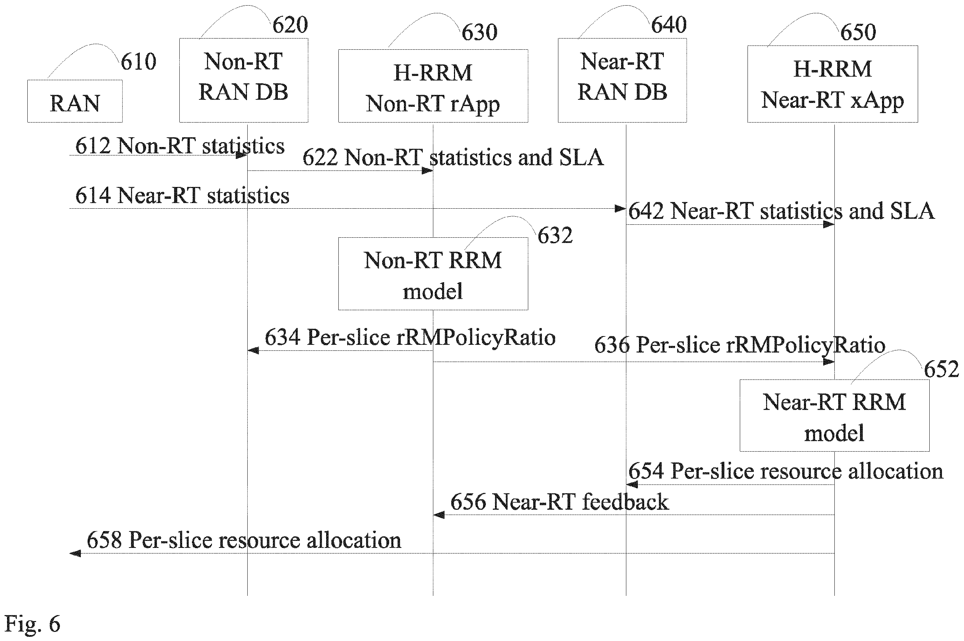

Method and its embodiments will be described in more detail in the context of the signalling diagram of Fig. 6.

Fig. 6 shows, by way of example, signalling between entities. H-RRM framework comprises the H-RRM non-RT rApp 630, its database (DB) 620, and the H-RRM near-RT xApp 650 and its DB 640. The entities 620, 630, 640, 650 may be located in a network node, e.g. in a gNB, for example. Thus, the signalling in Fig. 6 may be signalling between RAN 610 and a network node running the H-RRM framework. The RAN comprises one or more network nodes. For example, the RAN may be referred to as a first network node. The network node running the H-RRM framework may be referred to as a second network node.

A first set of RAN statistics 612 from RAN 610 may be received by the second network node. The first set of RAN statistics comprises non-RT statistics from the RAN. The first set of RAN statistics may comprise at least one of: transport block size per UE, radio link control (RLC) queue length per UE, throughput per UE, latency per UE, or resource availability of a network node, e.g. gNB.

For example, the first set of RAN statistics 612 may be delivered over the O1-PM interface. The first set of RAN statistics may be delivered to non-RT RAN DB 620, for example.

A second set of RAN statistics 614 from RAN 610 may be received by RRM entity. The second set of RAN statistics comprises near-RT statistics from the RAN. The second set of RAN statistics comprises at least one of: transport block size per UE, radio link control (RLC) queue length per UE, throughput per UE, latency per UE, resource utilization per slice, or resource availability of a network node, e.g. gNB.

For example, the second set of RAN statistics 614 may be delivered over the E2 interface. The second set of RAN statistics may be delivered to near-RT RAN DB 640, for example.

Each non-RT RIC may contain multiple near-RT RICs in its domain, and each near-RT RIC may contain several network nodes, e.g. gNBs, within its domain. Thus, effectively, the non-RT RIC controls a larger number of gNBs compared to each near-RT RIC. Consequently, a greater volume of statistics data may be received by the non-RT RIC, e.g. over the O1-PM interface, as compared to the near-RT RIC, e.g. over the E2 interface.

The non-RT statistics and service level agreement (SLA) 622 may be provided to a first RRM model as input. The first RRM model is a non-RT RL model, or a non-RT rApp 630. The non-RT rApp 630 may fetch the statistics and SLA from the non-RT DB 620. The SLA may be stored in the non-RT DB 620 and in the near-RT RAN DB 640. The SLA may be given when a slice is created.

In addition, the non-RT rApp 630 may use feedback from the H-RRM near-RT xApp 650 as input to the non-RT RL model as described later.

The non-RT RL model or non-RT RRM model 632 may output resource management policy per slice, e.g. per-slice rRMPolicyRatio for each slice within that non-RT RIC's domain. This action (per-slice rRMPolicyRatio 634) may be written to the non-RT RAN DB 620. The resource management policy per slice (per-slice rRMPolicyRatio 636), i.e. the output from the non-RT RL model, may be provided to the H-RRM near-RT xApp 650, for example over O1-CM interface or A1 interface.

The resource management policy per slice may be indicative of resource allocation of dedicated resources (DR), prioritized resources (PR) and/or shared resources (SR) per slice.

The near-RT statistics and SLA 642 and the resource management policy per slice may be provided to a second RRM model as input. The second RRM model is a near-RT RL model, or a non-RT xApp 650. The near-RT xApp 650 may fetch the statistics and SLA from the near-RT DB 640. The SLA may be stored in the non-RT DB 620 and in the near-RT RAN DB 640. The SLA may be given when a slice is created.

The near-RT RL model or near-RT RRM model 652 may use the near-RT statistics, SLA, and the policy guidance from the non-RT rApp as input and determine the resource allocation per slice for all slices across all network nodes within the near-RT RIC's domain.

The resource allocation decision or per-slice resource allocation 654 may be written to the near-RT RAN DB 640.

The resource allocation decision or per-slice resource allocation 658 may be provided to one or more network nodes, e.g. the respective gNBs. The resource allocation decision may be sent over the E2 interface, for example. For example, the resource allocation may be given as a single allocation value per slice. As another example, the resource allocation may be given as a set of allocation values indicative of DR, PR, and SR per slice.

The near-RT xApp 650 may provide feedback 656 to the non-RT rApp 630 to be used as input. The feedback may comprise at least one of: the resource allocation per slice, obtained as output from the near-RT RL model; or latency SLA violation per slice. The feedback may be provided over O1-PM interface or A1 interface.

Since each non-RT decision interval comprises several near-RT intervals, the non-RT rApp's policy guidance (per-slice rRMPolicyRatio 636) remains fixed throughout a given non-RT decision interval.

As described earlier, the end-user may leverage various statistics and configuration parameters provided by the H-RRM framework as disclosed herein to design its own RL-based model that addresses specific objectives. For example, one model may target spectral efficiency, while another model may address SLA satisfaction. Below, an example model, e.g. DRL model, is described, which may be leveraged in the H-RRM framework disclosed herein.

A problem may be formulated as a constrained optimization problem. A goal is to derive an optimal policy policy $\pi_\theta^*$, which minimizes the total resource usage while maintaining the SLA requirements. Specifically, given a fixed time period, the resource allocation problem $P_0$ may be formulated as follows,

$$P_0 : \max_{\pi_\theta} \mathbb{E}_{\pi_\theta} \left[ \sum_{t=0}^{T} \sum_{d=1}^{D} \sum_{i=1}^{S_d} R_{d,i}^t (s^t, a^t) \right],$$

where $(s^t, a^t)$ denote the state and action taken at time $t$, $R_i(s^t, a^t)$ represents the reward for slice i at a network node (e.g. gNB) j at time $t$, and $\pi_\theta$ is the resource allocation policy which is usually parameterized by a neural network.

With the overall slice-level SLA violation expressed as a sum of its users individual SLA violations, the SLA performance constraint may be expressed as follows

$$u_{d,i}^t \geq U_{d,i}, \forall t,$$

where $u_{d,i}^t$ represents the performance at time $t$ for slice i at a network node (e.g. gNB) d, while $U_{d,i}$ represents the SLA requirements for that slice. Consequently, the SLA violation at slice i at time $t$ can be expressed as a cost $c_{d,i}^t = 1 - \text{clip}(u_{d,i}^t / U_{d,i}, 0, 1)$. Furthermore, accounting for resource limitations at the given network node d having $N_d$ slices and $X_d$ amount of radio resources, we have,

$$\sum_{i=1}^{N_d} x_{d,i}^t \leq X_d, \forall t,$$

where $u_{d,i}^t$ represents the radio resource allocated to slice i at time $t$.

Next, leveraging the hierarchical structure of the H-RRM framework, we split the original problem $P_0$ above into two sub-problems, $P_1$ and $P_2$, as follows,

$$P_1: \max_{\pi_1} \mathbb{E}_{\pi_1} \left[ \sum_{k=0}^{t/\tau} \sum_{d=1}^{D} \sum_{i=1}^{S_d} R_{d,i}^{k\tau}(s^{k\tau}, a^{k\tau}) \right]$$

$$P_2: \max_{\pi_2} \mathbb{E}_{\pi_2} \left[ \sum_{t=0}^{\tau} \sum_{d=1}^{D} \sum_{i=1}^{S_d} R_{d,i}^{t}(s^{t}, a_2^{t}) \right].$$

$$R_{d,i}^t = -x_{d,i}^t - c_{d,i}^t,$$

where $P_1$ targets the long-term non-RT reward every $\tau$ time steps based on $s^{k\tau}$, which is the average state space during the non-RT interval, while $P_2$ targets the short-term near-RT reward at each time step $t$, with the total temporal window length being restricted to $\tau$. The non-RT rApp 630 solves $P_1$ while the near-RT xApp 650 solves $P_2$. The action $a_1$ is taken every $\tau$ time steps, representing the intrinsic guidance from the rApp in the form of the per-slice RRM policy configuration 636, while the action $a_2$ is taken every time step $t$, and represents the per-slice resource allocation decision 658 at the xApp.

We utilize deep deterministic policy gradient (DDPG) as a model-free off-policy algorithm for the policy learning. It combines ideas from deterministic policy gradient (DPG) and deep q-network (DQN), and uses experience replay and slow-learning target networks from DQN. It may operate over continuous action spaces, as it is based on DPG. DDPG follows the standard actor-critic method, wherein, given a state, the actor proposes an action, and a critic predicts whether the action is good or not. All the actors and critics in the two agents are deep neural networks (DNNs) with 3-hidden layers and 64 nodes in each layer, with rectified linear unit (ReLU) activation applied. Both DRL agents may utilize experience replay to update neural network in an off-policy way, for which the state-action transition pairs may be stored. The detailed algorithm is shown below:

Algorithm 1 Learning algorithm for hierarchical DRL (Hie-DRL):

1: Initialize experience replay memories $\{\mathcal{D}_1, \mathcal{D}_2\}$ and parameters $\{\theta_1, \theta_2\}$ for the non-RT and near-RT agents respectively.

2: for i=1, num_episodes do

3:          Initialize traffic

4:          for j=1, non_RT_steps do

5:                  $a_1 = \pi_1(s_1) + noise$

6:                  for k=1, near_RT_steps do

7:                          $a_2 = \pi_2(s_2) + noise$

8:                          Execute $a = a_1 \cdot a_2$

9:                          Obtain next state $s_2'$ and reward $r_2$ from environment

10:                       Store transition $(s_2, a_2, r_2, s_2')$ in $\mathcal{D}_2$

11:                       UPDATE_PARAMS($\mathcal{L}_2(\theta_{2,i}), \mathcal{D}_2$)

12:                       $s_2 \leftarrow s_2'$

13:                  end for

14:                  Calculate averaged state $s_1'$, and reward $r_1$

15:                  Store transition $(s_1, a_1, r_1, s_1')$ in $\mathcal{D}_1$

16:                  UPDATE_PARAMS($\mathcal{L}_1(\theta_{1,i}), \mathcal{D}_1$)

17:                  $s_1 \leftarrow s_1'$

18:          end for

19: end for

The example model has been validated in conjunction with the H-RRM framework as disclosed herein on an experimental testbed. In the H-RRM framework, the training and interference are performed both in the non-RT RIC and the near-RT RIC. When compared to two scenarios, where training and interference are performed only in the non-RT RIC or only in the near-RT RIC, the H-RRM framework has shown better performance. H-RRM has provided the least SLA violation while offering the most efficient resource utilization, both in the emulated traffic and the real-world traffic.

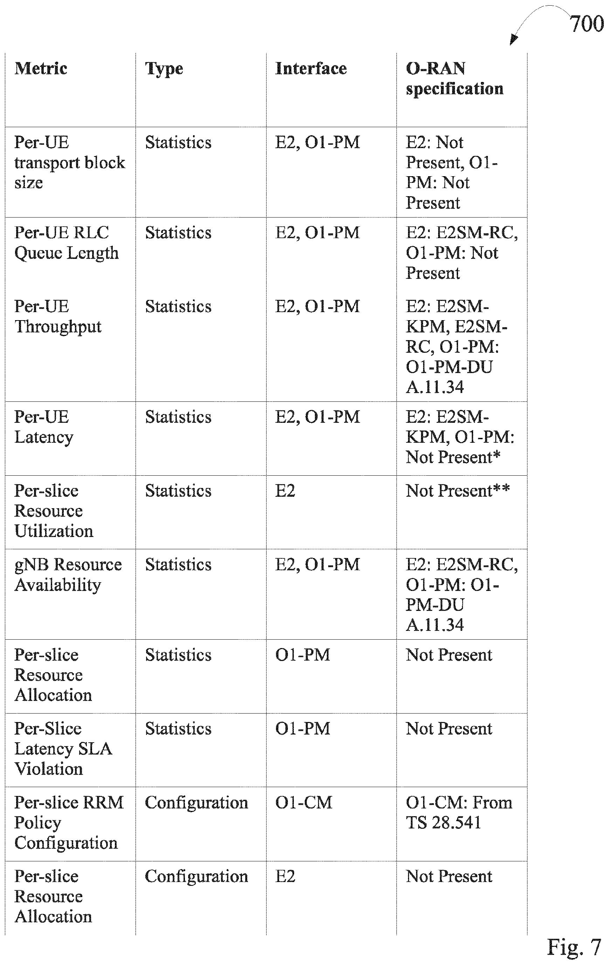

Fig. 7 shows, by way of example, metrics and interfaces for their transmission. A table 700 lists an option of possible interfaces that the H-RRM framework as disclosed herein may leverage. According to the option 1 presented in the table 700, interfaces E2, O1-PM and O1-CM may be used for transmission of metrics. As shown, the O1 interface (O1-PM and O1-CM) may be exclusively used for interactions between the non-RT rApp and near-RT xApp. Extensions to O-RAN's interfaces and signalling may be suggested. Asterisk * indicates that the O1-PM interface is currently used per 5G quality of service (QoS) identifier (per-5QI) or single-network slice selection assistance information (S-NSSAI) identifier. Double asterisk ** indicates that the E2 interface is currently used per UE-level. If the per-slice resource allocation is given as a set of allocation values, a suitable interface may already exist in the specification.

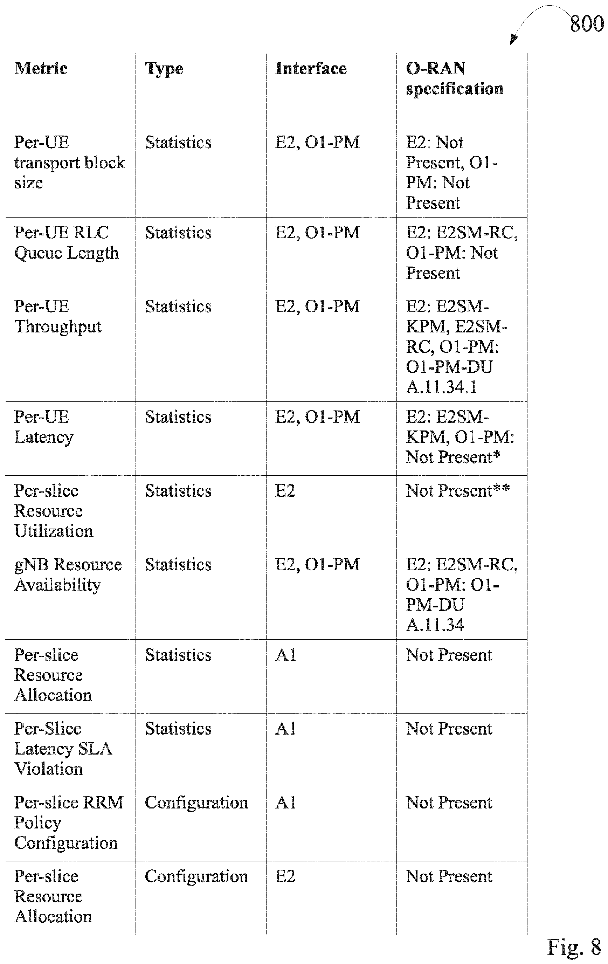

Fig. 8 shows, by way of example, metrics and interface for their transmission. A table 800 lists another option of possible interfaces that the H-RRM framework as disclosed herein may leverage. According to the option 2 presented in the table 800, interfaces E2, O1-PM and A1 may be used for transmission of metrics. As shown, the A1 interface may be exclusively used for interactions between the non-RT r-App and near-RT xApp. Extensions to O-RAN's interfaces and signalling may be suggested. Asterisk * indicates that the O1-PM interface is currently used per 5G quality of service (QoS) identifier (per-5QI) or single-network slice selection assistance information (S-NSSAI) identifier. Double asterisk ** indicates that the E2 interface is currently used per UE-level. If the per-slice resource allocation is given as a set of allocation values, a suitable interface may already exist in the specification.

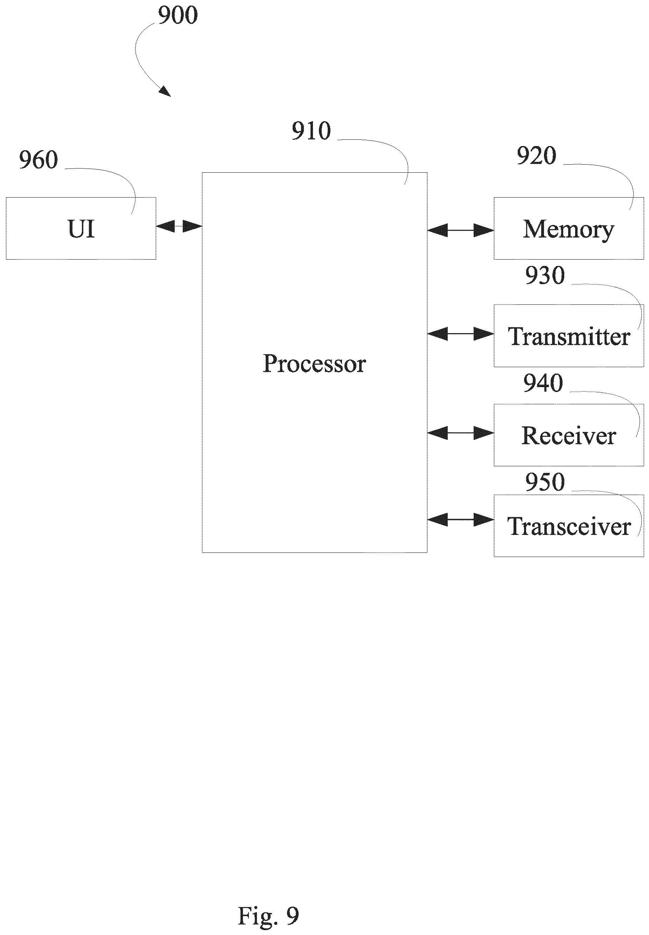

Fig. 9 shows, by way of example, a block diagram of an apparatus capable of performing the method(s) as disclosed herein. Illustrated is device 900, which may comprise, for example, an apparatus configured to realize the H-RRM framework 300 of Fig. 3, or a network node or RAN 610 of Fig. 6. The apparatus configured to realize the H-RRM framework may be comprised in a network node, e.g. gNB. Comprised in device 900 is processor 910, which may comprise, for example, a single- or multi-core processor wherein a single-core processor comprises one processing core and a multi-core processor comprises more than one processing core. Processor 910 may comprise, in general, a control device. Processor 910 may comprise more than one processor. Processor 910 may be a control device. A processing core may comprise, for example, a Cortex-A8 processing core manufactured by ARM Holdings or a Steamroller processing core designed by Advanced Micro Devices Corporation. Processor 910 may comprise at least one Qualcomm Snapdragon and/or Intel Atom processor. Processor 910 may comprise at least one application-specific integrated circuit, ASIC. Processor 910 may comprise at least one field-programmable gate array, FPGA. Processor 910 may be means for performing method steps in device 900. Processor 910 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as network node or server(s), to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 900 may comprise memory 920. Memory 920 may comprise random-access memory and/or permanent memory. Memory 920 may comprise at least one RAM chip. Memory 920 may comprise solid-state, magnetic, optical and/or holographic memory, for example. Memory 920 may be at least in part accessible to processor 910. Memory 920 may be at least in part comprised in processor 910. Memory 920 may be means for storing information. Memory 920 may comprise instructions, such as computer instructions or computer program code, that processor 910 is configured to execute. When instructions configured to cause processor 910 to perform certain actions are stored in memory 920, and device 900 overall is configured to run under the direction of processor 910 using instructions from memory 920, processor 910 and/or its at least one processing core may be considered to be configured to perform said certain actions. Memory 920 may be at least in part external to device 900 but accessible to device 900.

Device 900 may comprise a transmitter 930. Device 900 may comprise a receiver 940. Transmitter 930 and receiver 940 may be configured to transmit and receive, respectively, information in accordance with at least one cellular or non-cellular standard. Transmitter 930 may comprise more than one transmitter. Receiver 940 may comprise more than one receiver. Transmitter 930 and/or receiver 940 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 900 may comprise a near-field communication, NFC, transceiver 950. NFC transceiver 950 may support at least one NFC technology, such as NFC, Bluetooth, Wibree or similar technologies.

Device 900 may comprise user interface, UI, 960. UI 960 may comprise at least one of a display, a keyboard, a touchscreen, a vibrator arranged to signal to a user by causing device 900 to vibrate, a speaker and a microphone. A user may be able to operate device 900 via UI 960, for example, to browse the Internet, to manage digital files stored in memory 920 or on a cloud accessible via transmitter 930 and receiver 940, or via NFC transceiver 950, and/or to play games.

Processor 910 may be furnished with a transmitter arranged to output information from processor 910, via electrical leads internal to device 900, to other devices comprised in device 900. Such a transmitter may comprise a serial bus transmitter arranged to, for example, output information via at least one electrical lead to memory 920 for storage therein. Alternatively to a serial bus, the transmitter may comprise a parallel bus transmitter. Likewise processor 910 may comprise a receiver arranged to receive information in processor 910, via electrical leads internal to device 900, from other devices comprised in device 900. Such a receiver may comprise a serial bus receiver arranged to, for example, receive information via at least one electrical lead from receiver 940 for processing in processor 910. Alternatively to a serial bus, the receiver may comprise a parallel bus receiver.

Processor 910, memory 920, transmitter 930, receiver 940, NFC transceiver 950, and/or UI 960 may be interconnected by electrical leads internal to device 900 in a multitude of different ways. For example, each of the aforementioned devices may be separately connected to a master bus internal to device 900, to allow for the devices to exchange information. However, as the skilled person will appreciate, this is only one example and depending on the embodiment various ways of interconnecting at least two of the aforementioned devices may be selected.

The term "non-transitory" as used herein, is a limitation of the medium itself (i.e., tangible, not a signal) as opposed to a limitation on data storage persistency (e.g., RAM vs. ROM).

As used herein, "at least one of the following: <a list of two or more elements >" and "at least one of <a list of two or more elements >" and similar wording, where the list of two or more elements are joined by "and" or "or", mean at least any one of the elements, or at least any two or more of the elements, or at least all the elements.

## Claims

1. A method for radio access network slicing, comprising:

   receiving, from a network node, a first set of radio access network, RAN, statistics;
   receiving, from the network node, a second set of RAN statistics;

   wherein the first set of RAN statistics comprises non real time statistics from the radio access network comprising the network node; and
   the second set of RAN statistics comprises near real time statistics from a radio access network comprising the network node;

   providing at least the first set of RAN statistics and a service level agreement to a first radio resource management model as input, wherein the first radio resource management model is a non real time reinforcement learning model;
   obtaining, as output from the first radio resource management model, resource management policy per slice;
   providing at least the second set of RAN statistics, the service level agreement and the resource management policy per slice to a second radio resource management model as input, wherein the second radio resource management model is a near real time reinforcement learning model;
   obtaining, as output from the second radio resource management model, resource allocation per slice; and
   providing the resource allocation per slice to the network node.

2. The method of claim 1, wherein the first set of RAN statistics comprises at least one of:

   - transport block size per user equipment;
   - radio link control queue length per user equipment;

- throughput per user equipment;
- latency per user equipment; or
- resource availability of a network node of the radio access network.

3. The method of claim 1 or 2, wherein the second set of RAN statistics comprises at least one of:

- transport block size per user equipment;
- radio link control queue length per user equipment;
- throughput per user equipment;
- latency per user equipment;
- resource utilization per slice; or
- resource availability of a network node of the radio access network.

4. The method of any preceding claim, wherein
the resource management policy per slice is indicative of resource allocation of dedicated resources, prioritized resource and/or shared resource per slice.

5. The method of any preceding claim, further comprising:
providing feedback from the second radio resource management model as input to the first radio resource management model.

6. The method of claim 5, wherein the feedback comprises at least one of:

- the resource allocation per slice, obtained as output from the second radio resource management model; or
- latency SLA violation per slice.

7. A method, comprising:

providing, by a network node, a first set of radio access network statistics;
providing, by the network node, a second set of radio access network statistics;

wherein the first set of RAN statistics comprises non real time statistics from the radio access network comprising the network node; and
the second set of RAN statistics comprises near real time statistics from a radio access network comprising the network node;

receiving, by the network node, resource allocation per slice.

8. An apparatus comprising:

at least one processor; and
at least one memory storing instructions that, when executed by the at least one processor,
cause the apparatus at least to perform:

receiving, from a network node, a first set of radio access network, RAN, statistics;
receiving, from the network node, a second set of RAN statistics;

wherein the first set of RAN statistics comprises non real time statistics from the radio access network comprising the network node; and
the second set of RAN statistics comprises near real time statistics from a radio access network comprising the network node;

providing at least the first set of RAN statistics and a service level agreement to a first radio resource management model as input, wherein the first radio resource management model is a non real time reinforcement learning model;
obtaining, as output from the first radio resource management model, resource management policy per slice;
providing at least the second set of RAN statistics, the service level agreement and the resource management policy per slice to a second radio resource management model as input, wherein the second radio resource management model is a near real time reinforcement learning model;
obtaining, as output from the second radio resource management model, resource allocation per slice; and
providing the resource allocation per slice to the network node.

9. The apparatus of claim 8, wherein the first set of RAN statistics comprises at least one of:

   - transport block size per user equipment;
   - radio link control queue length per user equipment;
   - throughput per user equipment;
   - latency per user equipment; or
   - resource availability of a network node of the radio access network.

10. The apparatus of claim 8 or 9, wherein the second set of RAN statistics comprises at least one of:

   - transport block size per user equipment;
   - radio link control queue length per user equipment;
   - throughput per user equipment;
   - latency per user equipment;
   - resource utilization per slice; or
   - resource availability of a network node of the radio access network.

11. The apparatus of any of the claims 8 to 10, wherein
    resource management policy per slice is indicative of resource allocation of dedicated resources, prioritized resource and/or shared resource per slice.

12. The apparatus of any of the claims 8 to 11, caused to perform:
    providing feedback from the second radio resource management model as input to the first radio resource management model.

13. The apparatus of claim 12, wherein the feedback comprises at least one of:

   - the resource allocation per slice, obtained as output from the second radio resource management model; or
   - latency SLA violation per slice.

14. The apparatus of any of the claims 8 to 13, wherein the first set of radio access network statistics are received over O1-performance measurement interface.

15. The apparatus of any of the claims 8 to 14, wherein the second set of radio access network statistics are received over E2 interface.

Fig. 1

Fig. 2

Fig. 3

440

402a

H-RRM rApp
(Non-RT Agent)

403

402b

Non-RT RIC

450        403        402b        403        451        452

H-RRM xApp
(Near-RT Agent)

H-RRM xApp
(Near-RT Agent)

H-RRM xApp
(Near-RT Agent)

Near-RT RIC        Near-RT RIC        Near-RT RIC

401        404        401        404        401        404

410

E2 Nodes: gNB, DU, CU-CP, CU-UP

420                                    430

Fig. 4        UE                      Core
                                      network

500

receiving, from a network node, a first set of radio access network, RAN, statistics

510

receiving, from the network node, a second set of RAN statistics; wherein the first set of RAN statistics comprises non real time statistics from the radio access network comprising the network node; and
the second set of RAN statistics comprises near real time statistics from a radio access network comprising the network node

520

providing at least the first set of RAN statistics and a service level agreement to a first radio resource management model as input, wherein the first radio resource management model is a non real time reinforcement learning model

530

obtaining, as output from the first radio resource management model, resource management policy per slice

540

providing at least the second set of RAN statistics, the service level agreement and the resource management policy per slice to a second radio resource management model as input, wherein the second radio resource management model is a near real time reinforcement learning model

550

obtaining, as output from the second radio resource management model, resource allocation per slice

560

providing the resource allocation per slice to the network node

570

Fig. 5

EP 4 383 794 A1

| RAN 610 | Non-RT RAN DB 620 | H-RRM Non-RT rApp 630 | Near-RT RAN DB 640 | H-RRM Near-RT xApp 650 |
|---|---|---|---|---|

612 Non-RT statistics

622 Non-RT statistics and SLA

614 Near-RT statistics

642 Near-RT statistics and SLA

Non-RT RRM model 632

634 Per-slice rRMPolicyRatio

636 Per-slice rRMPolicyRatio

Near-RT RRM model 652

654 Per-slice resource allocation

656 Near-RT feedback

658 Per-slice resource allocation

Fig. 6

700

| Metric | Type | Interface | O-RAN specification |
|---|---|---|---|
| Per-UE transport block size | Statistics | E2, O1-PM | E2: Not Present, O1-PM: Not Present |
| Per-UE RLC Queue Length | Statistics | E2, O1-PM | E2: E2SM-RC, O1-PM: Not Present |
| Per-UE Throughput | Statistics | E2, O1-PM | E2: E2SM-KPM, E2SM-RC, O1-PM: O1-PM-DU A.11.34 |
| Per-UE Latency | Statistics | E2, O1-PM | E2: E2SM-KPM, O1-PM: Not Present* |
| Per-slice Resource Utilization | Statistics | E2 | Not Present** |
| gNB Resource Availability | Statistics | E2, O1-PM | E2: E2SM-RC, O1-PM: O1-PM-DU A.11.34 |
| Per-slice Resource Allocation | Statistics | O1-PM | Not Present |
| Per-Slice Latency SLA Violation | Statistics | O1-PM | Not Present |
| Per-slice RRM Policy Configuration | Configuration | O1-CM | O1-CM: From TS 28.541 |
| Per-slice Resource Allocation | Configuration | E2 | Not Present |

Fig. 7

800

| Metric | Type | Interface | O-RAN specification |
|--------|------|-----------|---------------------|
| Per-UE transport block size | Statistics | E2, O1-PM | E2: Not Present, O1-PM: Not Present |
| Per-UE RLC Queue Length | Statistics | E2, O1-PM | E2: E2SM-RC, O1-PM: Not Present |
| Per-UE Throughput | Statistics | E2, O1-PM | E2: E2SM-KPM, E2SM-RC, O1-PM: O1-PM-DU A.11.34.1 |
| Per-UE Latency | Statistics | E2, O1-PM | E2: E2SM-KPM, O1-PM: Not Present* |
| Per-slice Resource Utilization | Statistics | E2 | Not Present** |
| gNB Resource Availability | Statistics | E2, O1-PM | E2: E2SM-RC, O1-PM: O1-PM-DU A.11.34 |
| Per-slice Resource Allocation | Statistics | A1 | Not Present |
| Per-Slice Latency SLA Violation | Statistics | A1 | Not Present |
| Per-slice RRM Policy Configuration | Configuration | A1 | Not Present |
| Per-slice Resource Allocation | Configuration | E2 | Not Present |

Fig. 8

900

960

910

920

UI

Processor

Memory

930

Transmitter

940

Receiver

950

Transceiver

Fig. 9

Europäisches
Patentamt
European
Patent Office
Office européen
des brevets

## EUROPEAN SEARCH REPORT

Application Number

EP 23 21 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/187954 A1 (SAMSUNG ELECTRONICS CO LTD [KR]) 23 September 2021 (2021-09-23) | 1-4, 7-11,14, 15 | INV. H04W24/02 H04L41/5009 |
| Y | * paragraphs [0067] – [0104]; figures 3, 4 * | 5,6,12, 13 | |
| Y | CHINTAPALLI VENKATARAMI REDDY ET AL: "WIP: Impact of AI/ML Model Adaptation on RAN Control Loop Response Time", 2022 IEEE 23RD INTERNATIONAL SYMPOSIUM ON A WORLD OF WIRELESS, MOBILE AND MULTIMEDIA NETWORKS (WOWMOM), IEEE, 14 June 2022 (2022-06-14), pages 181-184, XP034164632, DOI: 10.1109/WOWMOM54355.2022.00053 [retrieved on 2022-08-09] * page 2 * | 5,6,12, 13 | |
| Y | WO 2022/046756 A1 (INTEL CORP [US]) 3 March 2022 (2022-03-03) * paragraph [0113] * | 5,6,12, 13 | |

TECHNICAL FIELDS
SEARCHED (IPC)

H04W
H04L

The present search report has been drawn up for all claims

| Place of search | Date of completion of the search | Examiner |
|---|---|---|
| Munich | 5 April 2024 | Allot, Corentin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 1373

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2024

| Patent document cited in search report | | Publication date | Patent family member(s) | | Publication date |
|---|---|---|---|---|---|
| WO 2021187954 | A1 | 23-09-2021 | CN | 113498174 A | 12-10-2021 |
| | | | EP | 4122234 A1 | 25-01-2023 |
| | | | US | 2023014932 A1 | 19-01-2023 |
| | | | WO | 2021187954 A1 | 23-09-2021 |
| WO 2022046756 | A1 | 03-03-2022 | NONE | | |

For more details about this annex : see Official Journal of the European Patent Office, No. 12/82

EPO FORM P0459